# FASCICULE DE BREVET EUROPEEN

(11) **EP 3 331 133 B1**
(45) Date de publication et mention de la délivrance du brevet: **02.06.2021**
(21) Numéro de dépôt: 17201236.1
(22) Date de dépôt: 13.11.2017
(51) Int. Cl.: H02K 5/22, H05K 1/11

(54) **BOITIER DE COMMANDE À CONNEXION SIMULTANEE POUR UNE POMPE DE CIRCULATION**
STEUEREINHEIT MIT SIMULTANER VERBINDUNG FÜR EINE UMWÄLZPUMPE
CONTROL HOUSING WITH SIMULTANEOUS CONNECTION FOR A CIRCULATION PUMP

(30) Priorité: 15.11.2016 FR 1661061
(43) Date de publication de la demande: 06.06.2018
(73) Titulaire: Wilo Intec, 18700 Aubigny sur Nere (FR)
(72) Inventeur: LE STRAT, Olivier, 18700 OIZON (FR)
(74) Mandataire: Hirsch & Partners

(56) Documents cités:
- FR-A1- 2 638 932
- FR-A1- 3 024 935
- US-A1- 2008 278 918

## Description

La présente invention concerne un boîtier de commande pour un moteur d'entrainement d'une pompe de circulation. L'invention concerne également un kit de commande comprenant un tel boitier de commande et un procédé de connexion d'un tel kit de commande.

Une pompe de circulation, ou circulateur, permet de mouvoir un fluide présent dans un circuit, par exemple un circuit de chauffage dans lequel circule de l'eau. La pompe de circulation est équipée d'un moteur permettant d'entraîner la roue à aubes de la pompe pour la mise en circulation de l'eau.

Pour obtenir un fonctionnement maîtrisé du moteur d'entraînement, il est connu d'adjoindre à la pompe de circulation un boîtier de commande du moteur d'entrainement. Ce boîtier de commande permet de transmettre au moteur d'entraînement l'énergie électrique nécessaire à son fonctionnement tout en permettant de faire varier la vitesse de rotation du moteur d'entrainement en fonction de valeurs de consigne et/ou de paramètres du circuit de chauffage prédéfinis ou transmis au cours du fonctionnement de la pompe de circulation.

Pour alimenter le boitier de commande en énergie électrique et permettre la transmission d'information, le boitier comprend une carte de commande sur laquelle un connecteur peut être connecté directement ou indirectement pour connecter la carte de commande à un module extérieur permettant l'alimentation en énergie électrique et la communication de signaux d'information.

On entend par une « connexion indirecte » le fait qu'une pièce d'interconnexion est disposée entre le connecteur et la carte de commande. On entend également par « connecteur » l'organe physique relié au module externe d'alimentation et de communication de signaux d'information de manière filaire ou sans fil. La connexion indirecte, ou interconnexion, a pour désavantage d'augmenter le nombre de pièces pour réaliser la connexion et donc d'augmenter le coût de fabrication du boîtier de commande. De plus, l'augmentation du nombre de connexions augmente le risque de mauvais contact et affecte donc la fiabilité de la connexion.

A contrario, on entend par « connexion directe » le fait que le connecteur soit au contact de la carte de commande elle-même. Une connexion directe n'est pas simple à mettre en œuvre car le connecteur est généralement standardisé suivant la fonction qu'il réalise, le boîtier de commande est donc configuré pour permettre un accès à la carte de commande spécifiquement aménagé pour ce connecteur. De plus, cet accès direct à la carte de commande entraîne des difficultés quant à la garantie d'étanchéité du boîtier de commande qui peut se trouver dans un environnement humide. Il est notamment difficile de garantir l'indice de protection attendue pour un circulateur de chauffage, en particulier l'indice de protection IP X2D (norme IEC 60529) prévoyant une étanchéité face à la pénétration de gouttes d'eau ayant 15° d'inclinaison.

Pour respecter l'indice de protection attendu, il est connu de monter un capot pivotant sur le boîtier de commande dans le cas d'une connexion directe. Toutefois, l'ouverture de ces capots pivotant demande un encombrement important peu en adéquation avec l'environnement restreint dans lequel le circulateur de chauffage est installé.

Par ailleurs, pour garantir la sécurité du circuit électrique d'alimentation et de transmission d'information, le moteur d'entraînement est relié à un potentiel électrique nul, autrement appelé la terre ou la masse, extérieur au boîtier de commande. Cette connexion est généralement réalisée via la pièce d'interconnexion ou par un connecteur additionnel ce qui augmente le nombre de pièces de connexion ou la complexité de la pièce d'interconnexion Des boîtiers de commande selon l'état de l'art sont connues des documents US2008/0278918A1, FR2638932, WO2012/085390A1 et WO2016/098033A1.

Le but de la présente invention est de fournir un boîtier de commande pour une pompe de circulation remédiant au moins partiellement aux inconvénients précités.

Plus particulièrement, l'invention vise à fournir un boîtier de commande permettant une connexion simplifiée et fiable.

A cette fin, la présente invention propose un boîtier de commande pour un moteur d'entraînement d'une pompe de circulation de fluide, selon la revendication 1.

Selon un autre mode de réalisation du boîtier de commande, les broches de connexion et de masse s'étendent principalement suivant un axe d'extension inclus dans le plan de connexion.

Selon un autre mode de réalisation, les portions de puissance et de transmission de la broche de connexion sont formées par des pattes de connexion reliées électriquement à un circuit imprimé sur la carte de commande.

Selon un autre mode de réalisation, la broche de connexion et la broche de masse sont configurées pour être connectées à un connecteur standard.

Selon un autre mode de réalisation, les broches de connexion et de masse sont accessibles au niveau d'une paroi de connexion du boîtier de commande, la paroi de connexion étant configurée pour positionner et maintenir un capot dans une position de fermeture dans laquelle le capot empêche l'accès aux broches de connexion et de masse.

Selon un autre mode de réalisation, les broches de connexion et de masse sont accessibles au niveau d'une paroi de connexion du boîtier de commande, une cavité de connexion étant formée dans la paroi de connexion pour accueillir les broches de connexion et de masse, le capot étant configuré pour fermer la cavité de connexion lorsque le capot est disposé en position de fermeture.

Selon un autre mode de réalisation, le boîtier de commande comprend en outre un passage d'au moins un câble de connecteur, le passage s'étendant entre la cavité de connexion et une paroi latérale du boîtier de commande.

Selon un autre mode de réalisation, le boîtier de commande comprend en outre un capot configuré pour coopérer avec la paroi de connexion de manière à être positionné et maintenu dans une position de fermeture dans laquelle le capot empêche l'accès aux broches de connexion et de masse.

Selon un autre mode de réalisation, le capot est mobile entre la position de fermeture et une position d'ouverture dans laquelle les broches de connexion et de masse sont accessibles.

Selon un autre mode de réalisation, le capot est adapté à coulisser par rapport à la paroi de connexion pour se mouvoir entre les positions d'ouverture et de fermeture selon un axe de coulissement du capot.

Selon un autre mode de réalisation, le capot est adapté à pivoter autour de l'axe de rotation et à coulisser le long de l'axe de coulissement pour se mouvoir entre les positions d'ouverture et de fermeture.

Selon un autre mode de réalisation, le boîtier de commande comprend en outre une gorge de coulissement formée sur le capot et configurée pour coopérer avec une saillie de guidage formée au niveau de la paroi de connexion de manière à guider le coulissement du capot entre une première et une deuxième positions de coulissement.

Selon un autre mode de réalisation, le capot est configuré pour être monté de manière amovible sur la paroi de connexion dans la position de fermeture, le capot étant en outre configuré pour être solidarisé de manière amovible avec le connecteur.

La présente invention propose également un kit de commande pour un moteur d'entraînement d'une pompe de circulation de fluide, le kit de commande comprenant :
- un boîtier de commande tel que décrit ci-dessus ;
- un connecteur connecté simultanément aux broches de connexion et de masse du boîtier de commande.

Selon un mode de réalisation du kit de commande, le connecteur comprend :
- au moins une portion de connecteur de signal apte à être connectée à la portion de transmission de la broche de connexion, ou
- au moins une portion de connecteur de puissance et au moins une portion de connecteur de masse aptes à être connectées respectivement à la portion de puissance de la broche de connexion et à la broche de masse.

L'invention propose en outre un procédé de connexion d'un connecteur à un boîtier de commande, dans lequel le procédé comporte les étapes consistant à :
- fournir un kit de commande tel que décrit ci-dessus ;
- connecter le connecteur à la carte de commande du boîtier de commande de sorte que le connecteur est connecté simultanément aux broches de connexion et de masse.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente schématiquement une vue en perspective d'un premier mode de réalisation du boîtier de commande et d'un connecteur à connecter à une carte de commande du boîtier de commande.
La figure 2 représente schématiquement une vue rapprochée de la carte de commande du boîtier de commande et du connecteur de la figure 1.
Les figures 3 et 4 représentent schématiquement une vue en coupe transversale du boîtier de commande des figures 1 et 2.
La figure 5 représente un deuxième mode de réalisation du boîtier de commande dans lequel un capot est amovible par rapport à une paroi de connexion et apte à être solidaire avec connecteur.

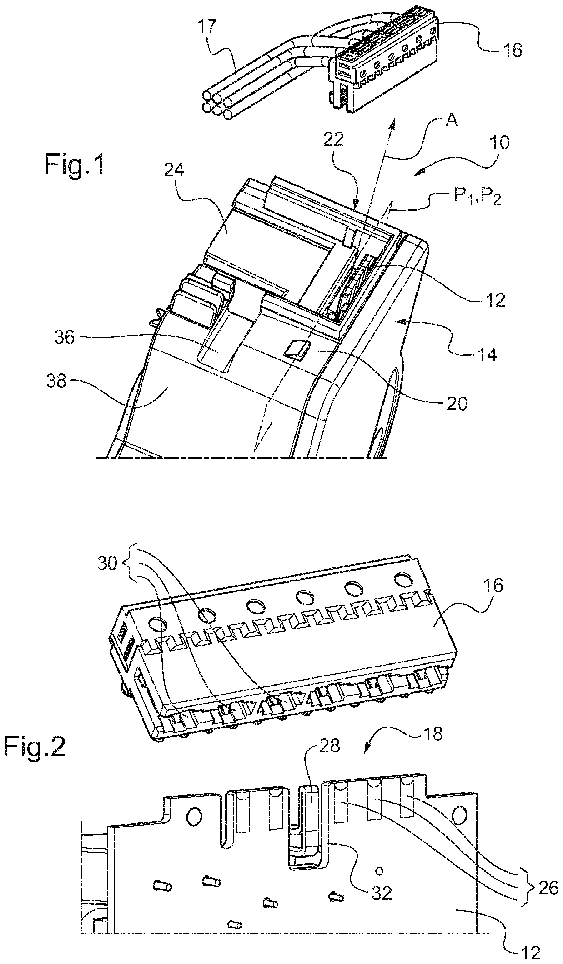

Selon la figure 1, il est proposé un premier mode de réalisation d'un boitier de commande 10 pour un moteur d'entraînement d'une pompe de circulation de fluide (non visibles). La pompe de circulation est de préférence une pompe de circulation, ou circulateur, apte à être installée dans une installation de chauffage d'un local pour permettre la mise en circulation d'un fluide caloporteur, par exemple de l'eau, dans l'installation de chauffage.

Le boîtier de commande 10 est relié au moteur d'entraînement de la pompe de circulation pour permettre l'alimentation électrique et la commande du moteur d'entraînement de sorte que la mise en circulation du fluide caloporteur peut être maîtrisée, notamment par des signaux d'information prédéterminés ou évoluant au cours de l'utilisation de la pompe de circulation.

Les signaux d'information sont tout type de données participant à la commande du moteur d'entraînement. En particulier, les signaux d'information peuvent être une consigne, par exemple de vitesse de rotation du moteur, un signal d'arrêt ou de mise en marche du moteur d'entraînement, ou bien encore des paramètres prédéterminés ou mesurés associés à la pompe de circulation, au fluide caloporteur la traversant ou encore toute grandeur physique ou chimique du circuit de chauffage.

Le boîtier de commande 10 comporte une carte de commande 12 du moteur d'entraînement disposée à l'intérieur d'un carter de boîtier 14 ayant la forme d'un parallélépipède s'étendant principalement suivant un axe d'extension A. De manière alternative, le carter de boîtier 14 peut être de toute forme s'étendant suivant l'axe d'extension A. La carte de commande 10 est reliée électriquement au moteur d'entraînement et configurée pour être connectée à un connecteur 16 de manière à alimenter électriquement le moteur d'entraînement et transmettre ou recevoir un signal d'information provenant d'un module externe d'alimentation et de communication (non visible) relié au connecteur 16. La carte de commande 12 s'étend principalement suivant deux directions formant un plan de carte P1. La carte de commande 12 est orientée par rapport au carter de boîtier 14 de sorte que l'axe d'extension A du carter de boîtier 14 est incluse dans le plan de carte P1. En particulier, le plan de carte P1 s'étend transversalement à une paroi de connexion 20 du carter de boîtier 14 au niveau de laquelle la carte de commande 12 est accessible. De manière alternative, la carte de commande 12 peut être orientée dans toute direction permettant au connecteur 16 d'être connectée à la carte de commande 12 au niveau de la paroi de connexion 20. Par exemple, le plan de carte P1 peut être orienté transversalement à la direction d'extension A du carter de boîtier 14. De préférence, la paroi de connexion 20 est la paroi supérieure du boîtier de carter 14 de sorte que la connexion est plus aisée pour un utilisateur.

Pour permettre la connexion électrique de la carte de commande 12 au connecteur 16, la carte de commande 12 comprend une broche de connexion 18, visible sur la figure 2. La carte de commande 12 est disposée par rapport au carter de boîtier 14 de sorte que la broche de connexion 18 est accessible pour être connectée avec le connecteur 16. En particulier, la broche de connexion 18 est accessible via une ouverture de connexion 22 formée dans le carter de boîtier 14, au niveau de la paroi de connexion 20. Pour faciliter la connexion, la broche de connexion 18 fait de préférence saillie hors de la paroi de connexion du carter de boîtier 14. Dans le mode de réalisation représenté sur la figure 1, la paroi de connexion 20 comprend une cavité de connexion 24 dans laquelle est formée l'ouverture de connexion 22. Dans ce cas, la broche de connexion 18 fait de préférence saillie hors du fond de la cavité de connexion 24. De manière alternative, la broche de connexion 18 peut être disposée en regard de l'ouverture de connexion 22 mais ne pas faire saillie hors du fond de la cavité de connexion 24 ou de la paroi de connexion 20 en l'absence de cavité de connexion 24.

Pour permettre la transmission d'énergie électrique ou de signaux d'information, la broche de connexion 18 comporte une portion de puissance pour l'alimentation en énergie de la carte de commande 12 et une portion de transmission permettant à la carte de commande de recevoir ou transmettre un signal d'information. Les portions d'alimentation et de transmission sont ici formées par tout ou partie des pattes de connexion 26 conductrices formées par un circuit imprimé sur la carte de commande 12 par lesquelles l'énergie électrique et les signaux d'information sont transmis. Une même patte de connexion 26 peut être apte à transmettre simultanément de l'énergie électrique et des signaux d'information ou bien chacune des pattes de connexion 26 peut être dédiée soit à la transmission d'énergie électrique soit à la transmission de signaux d'information.

Pour permettre à la broche de connexion 18 d'être connectée à un connecteur 16 standard, la broche de connexion 18 est formée suivant un plan de connexion P2 confondu avec le plan de carte P1. De manière alternative, le plan de connexion P2 peut être décalé angulairement par rapport au plan de carte P1 pour permettre une connexion frontale du connecteur 16 tout en ayant une carte de commande 12 s'étendant suivant l'axe d'extension du carter de boîtier 14.

On entend par connecteur « standard » un connecteur comprenant des ports de connexion 30 alignés suivant une direction de connexion configuré pour être directement connecté en bout à une carte de commande 12 comprenant un circuit imprimé, ou une carte de type PCB (du terme anglais « *Printed Circuit Board* »). Un type de connecteur standard est un connecteur RAST (« *Raster Anschluss Steck Technik* »). On entend par « connexion en bout » le fait de connecter le connecteur sur une tranche, ou un bord, de la carte de commande 12.

Pour garantir la sécurité électrique du moteur d'entraînement, le boîtier de commande 10 comprend également une broche de masse 28 apte à raccorder le moteur d'entraînement à un potentiel électrique nul, autrement appelé terre ou masse, pour former un circuit électrique avec la portion de puissance de la broche de connexion 18.

Pour simplifier la connexion des broches de connexion 18 et de masse 28, la carte de commande 12 est formée de telle sorte que les broches de connexion 18 et de masse 28 sont aptes à être connectées simultanément à un même connecteur, notamment le connecteur 16. Ainsi, il est possible de s'affranchir de l'utilisation d'une pièce d'interconnexion ou d'un autre connecteur dédié à la broche de masse 28. Cette connexion simultanée des broches de connexion 18 et de masse 28 permet d'obtenir une connexion simplifiée et plus fiable par rapport aux boîtiers de commande connus.

Pour permettre une connexion simultanée des broches de connexion 18 et de masse 28 à un même connecteur standard, les broches de connexion 18 et de masse 28 sont disposées dans le plan de connexion P2. Ainsi, les broches de connexion 18 et de masse 28 sont alignées suivant une même direction. En particulier, la broche de masse 28 s'étend à l'intérieur d'une découpe 32 formée dans la carte de commande 12. La découpe 32 forme un logement dans lequel la broche de masse 28 est apte à se loger pour être alignée avec la broche de connexion 18. De manière alternative, la découpe 32 peut être de toute forme ou orientation permettant à la broche de masse 28 d'être alignée avec la broche de connexion 18.

La broche de masse 28 forme un crochet dont la partie d'extrémité est similaire aux pattes de connexion 26 de sorte que la broche de masse 28 peut être connectée à un port de connexion 30 du connecteur 16. En particulier, la broche de masse 28 est formée par une lame conductrice pliée sur elle-même pour former la portion d'extrémité rectiligne apte à être alignée avec les pattes de connexion 26.

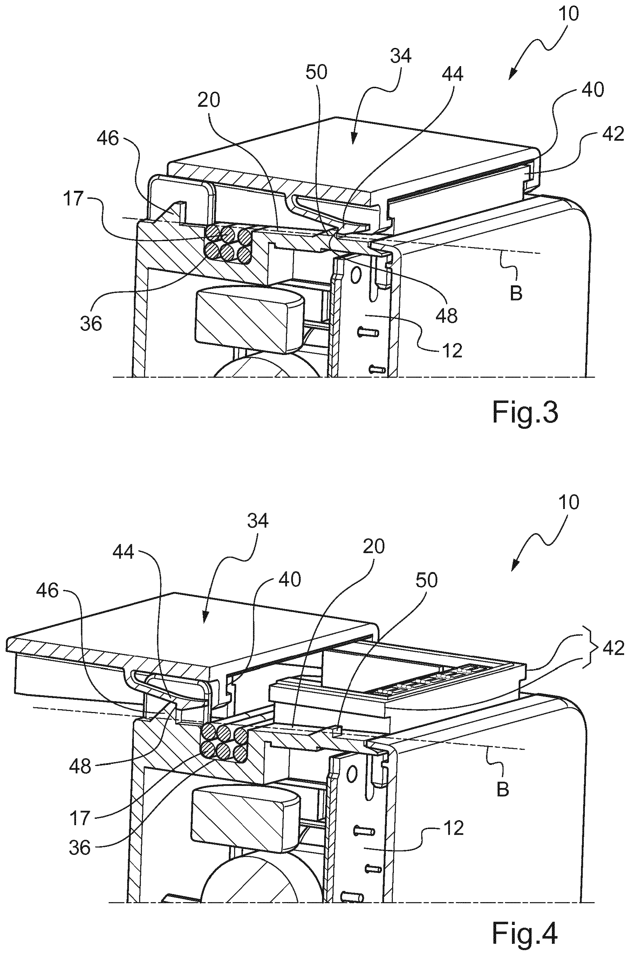

En référence aux figures 3 et 4, le boîtier de connexion 10 comprend en outre un capot 34 mobile entre une position de fermeture dans laquelle le capot 34 empêche l'accès aux broches de connexion 18 et de masse 28 et une position d'ouverture dans laquelle les broches de connexion 18 et de masse 28 sont accessibles pour une connexion à un connecteur 16. En particulier, le capot 34 permet de sélectivement recouvrir ou rendre accessible la cavité de connexion 24 dans laquelle les broches de connexion 18 et de masse 28 sont logées. Le capot 34 est ainsi configuré pour fermer la cavité de connexion 24 lorsque le capot 34 est disposé en position de fermeture. Le capot 34 permet d'améliorer la protection de la connexion au connecteur 16 vis-à-vis de corps étrangers ou de projections d'eau.

Pour permettre aux câbles 17 du connecteur 16 de s'étendre hors de la cavité de connexion 24, un passage 36 est formé au niveau de la paroi de connexion 20. Le passage 24 s'étend entre la cavité de connexion 24 et une paroi latérale 38 du boîtier de commande 10.

Pour se déplacer entre les positions de fermeture et d'ouverture, le capot 34 est adapté à coulisser par rapport à la paroi de connexion 20 selon un axe de coulissement B du capot 34. L'axe de coulissement B s'étend le long de la paroi de connexion 20 et transversalement au plan de connexion P2 de sorte que le capot 34 coulisse parallèlement à la paroi de connexion 20. De manière alternative ou en combinaison avec un coulissement, le capot 34 peut être adapté à pivoter autour d'un axe de rotation pour se mouvoir entre les positions d'ouverture et de fermeture. L'axe de rotation peut être transversal à l'axe de coulissement B ou être orienté dans toute direction permettant au capot 34 de recouvrir le connecteur 16 dans la position de fermeture et de rendre accessible le connecteur 16 dans la position d'ouverture. De manière alternative ou en combinaison, le capot 34 et la paroi de connexion 20 peuvent ne permettre qu'un seul mouvement simultané, ou en même temps, parmi le pivotement et le coulissement du capot 34 par rapport à la paroi de connexion 20. De manière alternative, le capot 34 peut se déplacer entre les positions de fermeture et d'ouverture en réalisant une rotation autour de l'axe de rotation puis un coulissement le long de l'axe de coulissement B qui serait dès lors décalé angulairement par rapport à la paroi de connexion 20. En effet, dans ce cas, l'axe de coulissement B formerait un angle avec la paroi de connexion 20 sensiblement égal à l'angle formé entre le capot 34 et la paroi de connexion 20. De manière alternative encore, l'axe de rotation peut être orienté transversalement à la paroi de connexion 20. Le capot 34 peut également être adapté à combiner plusieurs déplacements pour se mouvoir entre les positions d'ouverture et de fermeture. En particulier, le capot 34 peut être adapté à pivoter autour de l'axe de rotation et à coulisser le long de l'axe de coulissement B pour se mouvoir entre les positions d'ouverture et de fermeture.

Pour améliorer l'étanchéité de la cavité de connexion 24, le capot 34 et le carter de boîtier 14 peuvent comprendre des joints ou tout élément permettant d'empêcher davantage des projections d'eau ou de poussières d'entrer à l'intérieur de la cavité de connexion 24. Ainsi, la configuration du capot 34 ainsi que les joints d'étanchéité permettent au capot 34 de garantir un indice de protection satisfaisant pour une installation de chauffage. En particulier, le capot 34 permet de garantir un indice de protection IP X2D, voire IPX4D avec l'ajout de joints d'étanchéité, prévoyant une étanchéité face à la pénétration de gouttes d'eau ayant 15° d'inclinaison.

Pour guider le coulissement du capot 34 entre les positions d'ouverture et de fermeture, le carter de boîtier 14 comporte une gorge de coulissement 40 formée sur le capot 34 et configurée pour coopérer avec une saillie de guidage 42 formée au niveau de la paroi de connexion 20 pour guider le coulissement du capot 34. La gorge de coulissement 40 a une forme en U coopérant avec une forme T de la saillie de guidage 42 pour améliorer le coulissement, ou autrement dit le guidage en translation. La gorge de coulissement 40 forme un rail dans lequel coulisse la saillie de guidage 42. La gorge de coulissement 40 et la saillie de guidage sont formées de manière à s'étendre le long de l'axe de coulissement B entre les première et deuxième positions de coulissement du capot 34. De manière alternative, la gorge de coulissement 40 peut être formée au niveau de la paroi de connexion 20 et la saillie de guidage 42 formée sur le capot 34.

En référence à la figure 4, le capot 34 comprend une excroissance 44, ou bras, configurée pour coopérer avec une butée de position ouverte 46 formée au niveau de la paroi de connexion 20. La butée de position ouverte 46 permet de définir la position d'ouverture du capot 34. En effet, lorsque l'excroissance 44 coopère avec la butée de position ouverte 46, le capot 34 est en position d'ouverture. Pour cela, l'excroissance 44 est formée au niveau d'une première extrémité du capot 34 tandis que la butée de position ouverte 46 est formée en regard d'une deuxième extrémité du capot opposée à la première extrémité. L'excroissance 44 et la butée de position ouverte 46 sont formées de manière à être alignées le long de l'axe de coulissement B. De manière alternative, l'excroissance 44 et la butée de position ouverte 46 peuvent être formées de manière à être alignées le long d'un axe parallèle à l'axe de coulissement B.

Pour éviter tout risque de perte du capot 34, le capot 34 et la paroi de connexion 20 sont configurés pour que le capot 34 ne puisse pas être désolidarisé de la paroi de connexion 20, notamment lorsque le capot 34 est en position d'ouverture. Pour maintenir cette solidarisation, l'excroissance 44 et la butée de position ouverte 46 sont configurées de sorte que le capot 34 ne peut pas être retiré en translatant le capot 34 le long de l'axe de coulissement B. Pour cela, un ergot 48 est formé sur l'excroissance 44 et apte à être bloqué par la butée de position ouverte 46. De plus, la saillie de guidage 42 est logée à l'intérieur de la gorge de coulissement de sorte que le capot 34 ne peut pas être désolidarisé de la paroi de connexion 20 par un mouvement transversal à l'axe de coulissement B. Ainsi, le capot 34 ne peut pas être perdu par un utilisateur ou gêner cet utilisateur durant une opération d'installation ou de maintenance.

Pour réaliser un maintien en position du capot 34 en position de fermeture, le carter de boîtier 14 comprend également une butée de position fermée 50 formée au niveau de la paroi de connexion 20. La butée de position fermée 50 est configurée pour coopérer avec l'excroissance 44 lorsque le capot 34 est en position de fermeture. L'excroissance 44 est un bras apte à être déformé élastiquement pour dissocier l'excroissance 44 de la butée de position fermée 50. De plus, l'excroissance 44 est accessible par un outil de sorte que la déformation élastique de l'excroissance 44 permet de ne plus maintenir la position de fermeture et ainsi d'autoriser le coulissement du capot 34. Ce maintien en position permet de sécuriser la position du capot 34 et donc garantir l'étanchéité de la cavité de connexion 24.

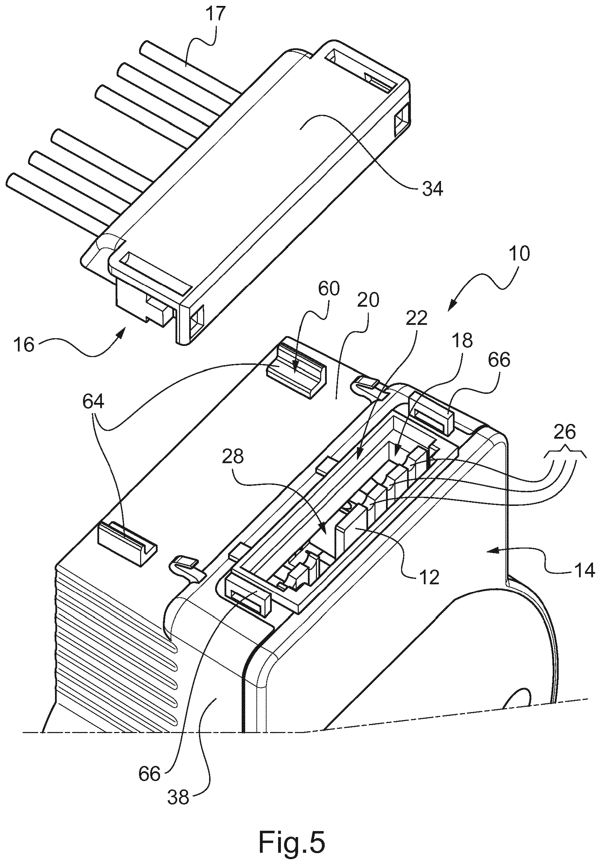

En référence à la figure 5, un deuxième mode de réalisation du boîtier de commande 10 est proposé. Le deuxième mode de réalisation du boîtier de commande 10 se distingue du premier mode de réalisation en ce que le capot 34 n'est pas déplacé par coulissement ou pivotement par rapport à la paroi de connexion 20. Dans ce mode de réalisation, le capot 34 est amovible par rapport à la paroi de connexion 20. On entend par le terme « amovible », le fait que le capot 34 puisse être désolidarisé de la paroi de connexion 20 de manière à ce que le capot 34 et la paroi de connexion 20 soient indépendants l'un de l'autre. Ainsi, le capot 34 peut être déplacé de la position d'ouverture ou de fermeture par désolidarisation ou démontage du capot 34 par rapport à la paroi de connexion 20. La paroi de connexion 20 comprend un emplacement de stockage 60 pour définir la position d'ouverture. Le déplacement de la position d'ouverture vers la position de fermeture est réalisé en désolidarisant le capot 34 de l'emplacement de stockage 60 puis en solidarisant le capot 34 avec la paroi de connexion 20 dans la position de fermeture, i.e. au niveau des broches de connexion 18 et de masse 28. Le boîtier de connexion 20 comprend des premiers 64 et des deuxièmes 66 plots formés en saillie par rapport à la paroi de connexion 20. Les premiers 64 et deuxième 66 plots permettent de solidariser le capot 34 par clip ou encliquetage, autrement dit par déformation élastique puis mise en butée au niveau de la position d'ouverture et au niveau de la position de fermeture, respectivement. De manière alternative, la paroi de connexion 20 peut comprendre tout type de moyens permettant de solidariser le capot 34 au niveau des positions d'ouverture et de fermeture.

De plus, selon le mode de réalisation de la figure 5, le capot 34 est configuré pour être solidarisé de manière amovible avec le connecteur 16, par exemple par clip ou encliquetage. Ainsi, une fois solidarisé avec le connecteur 16, le capot 34 permet de former un connecteur 16 avec capot intégré. Le fait de solidariser le connecteur 16 et le capot 34 permet de réduire les risques qu'un utilisateur oublie de remettre en place le capot 34.

Le connecteur 16 peut comporter plusieurs portions de connecteur, notamment une portion de connecteur de signal, une portion de connecteur de puissance et une portion de connecteur de masse configurées pour être respectivement connectées aux portions de signal et de puissance et à la broche de masse 28. Les portions de connecteur de signal, de puissance et de masse peuvent être physiquement indépendantes les unes des autres de manière à pouvoir sélectivement ne connecter que l'une ou plusieurs des portions de connecteur de signal, de puissance et de masse.

Il est également proposé un kit de commande pour un moteur d'entraînement d'une pompe de circulation de fluide comprenant un boîtier de commande 10 selon le premier ou le deuxième mode de réalisation. Le kit de commande comprend également un connecteur 16 connecté simultanément aux broches de connexion 18 et de masse 28 du boîtier de commande 10.

Le deuxième mode de réalisation permet en outre de fournir un kit de commande ayant une grande flexibilité de composition. En effet, l'amovibilité du capot 34 par rapport à la paroi de connexion 20 et du connecteur 16 par rapport au capot 34 permet de fournir un kit de commande avec ou sans capot 34 et avec ou sans connecteur 16. Cette flexibilité est particulièrement intéressante pour permettre une offre du kit de commande adaptée aux besoins d'un client et d'améliorer la logistique associée à la fourniture de ce kit de commande. A titre d'exemple, le kit de commande peut être fourni avec le connecteur 16 connecté aux broches de connexion 18 et de masse 28 avec le capot 34 monté sur la paroi de connexion 20. Alternativement, le kit de commande peut être fourni avec uniquement le boîtier de commande 20, c'est-à-dire que c'est le client qui fournira le capot 34 et le connecteur 16, notamment dans le cas d'un remplacement de matériel. A titre d'alternative encore, le kit de commande peut être fourni avec le capot 34 monté sur la paroi de connexion 20 mais sans connecteur 16 connecté aux broches de connexion 18 et de masse 28.

De plus, en combinaison avec le paragraphe précédent, lorsque le connecteur 16 est formé de plusieurs portions de connecteur, il est possible de fournir le kit de commande avec l'une ou plusieurs des portions de connecteur de signal, de puissance et de masse. A titre d'exemple, le kit de commande peut être fourni sans aucun connecteur 16 ou bien avec seulement les portions de connecteur de signal ou de puissance et de masse. Ceci permet de s'adapter encore davantage aux besoins du client et d'améliorer davantage la logistique associée à la fourniture du kit de commande.

Il est en outre proposé un procédé de connexion d'un connecteur 16 à un boitier de commande 10. Le procédé consiste à fournir un kit de commande et à connecter le connecteur 16 à la carte de commande du boîtier de commande 10 de sorte que le connecteur 16 est connecté simultanément aux broches de connexion 18 et de masse 28.

Bien entendu, la présente invention n'est pas limitée aux exemples et au mode de réalisation décrits et représentés, mais par les revendications annexées.

A titre d'exemple, le capot 34 peut être configuré de manière à comporter une ou plusieurs rotations et un ou plusieurs coulissements pour être déplacé entre les position d'ouverture et de fermeture. En particulier, les différentes rotations et les coulissements peuvent être réalisés suivant des axes de coulissement et de rotation différents.

## Revendications

1. Boîtier de commande (10) pour un moteur d'entraînement d'une pompe de circulation de fluide, comprenant ;
- une carte de commande (12) du moteur d'entraînement s'étendant principalement suivant deux directions formant un plan de carte (P1) et comprenant au moins une broche de connexion (18), ladite broche de connexion (18) est formée suivant un plan de connexion (P2) confondu avec le plan de carte (P1) et comporte une portion de puissance pour l'alimentation en énergie de la carte de commande (12) et une portion de transmission permettant à la carte de commande (12) de recevoir ou transmettre un signal d'information ;
- une broche de masse (28) apte à raccorder le moteur d'entraînement à une terre pour former un circuit électrique avec la portion de puissance de la broche de connexion (18) ;
dans lequel les broches de connexion (18) et de masse (28) sont disposées dans un même plan de connexion (P2) et sont aptes à être connectées simultanément à un même connecteur (16) **caractérisé en ce que** la broche de masse (28) s'étend à l'intérieur d'une découpe (32) formée dans la carte de commande (12).

2. Boîtier de commande (10) selon la revendication 1, dans lequel les broches de connexion (18) et de masse (28) s'étendent principalement suivant un axe d'extension (A) inclus dans le plan de connexion (P2).

3. Boîtier de commande (10) selon la revendication 1 ou 2, dans lequel les portions de puissance et de transmission de la broche de connexion (18) sont formées par des pattes de connexion (26) reliées électriquement à un circuit imprimé sur la carte de commande (12).

4. Boîtier de commande (10) selon l'une quelconque des revendications précédentes, dans lequel la broche de connexion (18) et la broche de masse (28) sont configurées pour être connectées à un connecteur (16) standard.

5. Boîtier de commande (10) selon l'une quelconque des revendications précédentes, dans lequel les broches de connexion (18) et de masse (28) sont accessibles au niveau d'une paroi de connexion (20) du boîtier de commande (10), la paroi de connexion étant configurée pour positionner et maintenir un capot (34) dans une position de fermeture dans laquelle le capot (34) empêche l'accès aux broches de connexion (18) et de masse (28).

6. Boîtier de commande (10) selon la revendication 5, dans lequel les broches de connexion (18) et de masse (28) sont accessibles au niveau d'une paroi de connexion (20) du boîtier de commande (10), une cavité de connexion (24) étant formée dans la paroi de connexion (20) pour accueillir les broches de connexion (18) et de masse (28), le capot (34) étant configuré pour fermer la cavité de connexion (24) lorsque le capot (34) est disposé en position de fermeture.

7. Boîtier de commande (10) selon la revendication 6, comprenant en outre un passage (36) d'au moins un câble (17) de connecteur (16), le passage (36) s'étendant entre la cavité de connexion (24) et une paroi latérale (38) du boîtier de commande (10).

8. Boîtier de commande (10) selon l'une des revendications 5 à 7, comprenant en outre un capot (34) configuré pour coopérer avec la paroi de connexion (20) de manière à être positionné et maintenu dans une position de fermeture dans laquelle le capot (34) empêche l'accès aux broches de connexion (18) et de masse (28).

9. Boîtier de commande (10) selon la revendication 8, dans lequel le capot (34) est mobile entre la position de fermeture et une position d'ouverture dans laquelle les broches de connexion (18) et de masse (28) sont accessibles, ou le capot (34) est configuré pour être monté de manière amovible sur la paroi de connexion (20) dans la position de fermeture, le capot (34) étant en outre configuré pour être solidarisé de manière amovible avec le connecteur (16).

10. Boîtier de commande (10) selon la revendication 9, dans lequel le capot (34) est mobile entre la position de fermeture et une position d'ouverture , le capot (34) étant adapté à coulisser par rapport à la paroi de connexion (20) pour se mouvoir entre les positions d'ouverture et de fermeture selon un axe de coulissement (B) du capot (34), ou étant adapté à pivoter autour de l'axe de rotation et à coulisser le long de l'axe de coulissement (B) pour se mouvoir entre les positions d'ouverture et de fermeture.

11. Boîtier de commande (10) selon la revendication 10, dans lequel le capot (34) est adapté à coulisser par rapport à la paroi de connexion (20), comprenant en outre une gorge de coulissement (40) formée sur le capot (34) et configurée pour coopérer avec une saillie de guidage (42) formée au niveau de la paroi de connexion (20) de manière à guider le coulissement du capot (34) entre une première et une deuxième positions de coulissement.

12. Kit de commande pour un moteur d'entraînement d'une pompe de circulation de fluide, le kit de commande comprenant :
- un boîtier de commande (10) selon l'une quelconque des revendications précédentes ;
- un connecteur (16) connecté simultanément aux broches de connexion (18) et de masse (28) du boîtier de commande (10).

13. Kit de commande selon la revendication 12, dans lequel le connecteur (16) comprend :
- au moins une portion de connecteur de signal apte à être connectée à la portion de transmission de la broche de connexion (18), ou
- au moins une portion de connecteur de puissance et au moins une portion de connecteur de masse aptes à être connectées respectivement à la portion de puissance de la broche de connexion (18) et à la broche de masse (28).

14. Procédé de connexion d'un connecteur (16) à un boîtier de commande (10), dans lequel le procédé comporte les étapes consistant à :
- fournir un kit de commande selon la revendication 12 ou 13 ;
- connecter le connecteur (16) à la carte de commande (12) du boîtier de commande (10) de sorte que le connecteur (16) est connecté simultanément aux broches de connexion (18) et de masse (28).

## Patentansprüche

1. Steuereinheit (10) für einen Antriebsmotor einer Fluidumwälzpumpe, umfassend:
- eine Steuerkarte (12) des Antriebsmotors, die sich hauptsächlich in zwei Richtungen, die eine Kartenebene (P1) bilden, erstreckt, und umfassend mindestens einen Anschlussstift (18), wobei der Anschlussstift entlang einer Anschlussebene (P2) ausgebildet ist, die mit der Kartenebene (P1) zusammenfällt, und einen Leistungsabschnitt für die Energieversorgung der Steuerkarte (12) und einen Übertragungsabschnitt umfasst, der es der Steuerkarte (12) ermöglicht, ein Informationssignal zu empfangen oder zu übertragen;
- einen Massekontaktstift (28), der geeignet ist, den Antriebsmotor mit einer Erde zu verbinden, um eine elektrische Schaltung mit dem Leistungsabschnitt des Anschlussstiftes (18) zu bilden;
wobei der Anschluss- (18) und der Massekontaktstift (28) in einer selben Anschlussebene (P2) angeordnet und geeignet sind, gleichzeitig an einen selben Verbinder (16) angeschlossen zu werden,
**dadurch gekennzeichnet, dass** sich der Massekontaktstift (28) innerhalb eines Ausschnitts (32) erstreckt, der in der Steuerkarte (12) ausgebildet ist.

2. Steuereinheit (10) nach Anspruch 1, bei der sich die Anschluss- (18) und Massekontaktstifte (28) hauptsächlich entlang einer Ausdehnungsebene (A), die in die Anschlussebene (P2) eingeschlossen ist, erstrecken.

3. Steuereinheit (10) nach Anspruch 1 oder 2, bei der die Leistungs- und Übertragungsabschnitte des Anschlussstifts (18) von Anschlusslaschen (26) gebildet sind, die elektrisch mit einer gedruckten Schaltung auf der Steuerkarte (12) verbunden sind.

4. Steuereinheit (10) nach einem der vorhergehenden Ansprüche, bei der der Anschlussstift (18) und der Massekontaktstift (28) eingerichtet sind, um an einen Standardverbinder (16) angeschlossen zu werden.

5. Steuereinheit (10) nach einem der vorhergehenden Ansprüche, bei der die Anschluss- (18) und Massekontaktstifte (28) im Bereich einer Anschlusswand (20) der Steuereinheit (10) zugänglich sind, wobei die Anschlusswand eingerichtet ist, um eine Kappe (34) in einer Verschlussposition zu halten, in der die Kappe (34) den Zugang zu den Anschluss- (18) und Massekontaktstiften (28) verhindert.

6. Steuereinheit (10) nach Anspruch 5, bei der die Anschluss-(18) und Massekontaktstifte (28) im Bereich einer Anschlusswand (20) der Steuereinheit (10) zugänglich sind, wobei ein Anschlusshohlraum (24) in der Anschlusswand (20) ausgebildet ist, um die Anschluss- (18) und Massekontaktstifte (28) aufzunehmen, wobei die Kappe (34) eingerichtet ist, um den Anschlusshohlraum (24) zu verschließen, wenn die Kappe (34) in Verschlussposition angeordnet ist.

7. Steuereinheit (10) nach Anspruch 6, ferner umfassend einen Durchgang (36) mindestens eines Kabels (17) eines Verbinders (16), wobei sich der Durchgang (36) zwischen dem Anschlusshohlraum (24) und einer Seitenwand (38) der Steuereinheit (10) erstreckt.

8. Steuereinheit (10) nach einem der Ansprüche 5 bis 7, ferner umfassend eine Kappe (34), die eingerichtet ist, um mit der Anschlusswand (20) zusammenzuwirken, um in einer Verschlussposition positioniert und gehalten zu werden, in der die Kappe (34) den Zugang zu den Anschluss- (18) und Massekontaktstiften (28) verhindert.

9. Steuereinheit (10) nach Anspruch 8, bei der die Kappe (34) zwischen der Verschlussposition und einer Öffnungsposition, in der die Anschluss- (18) und Massekontaktstifte (28) zugänglich sind, beweglich ist, oder die Kappe (34) eingerichtet ist, um abnehmbar an der Anschlusswand (20) in der Verschlussposition montiert zu sein, wobei die Kappe (34) ferner eingerichtet ist, um abnehmbar mit dem Verbinder (16) verbunden zu werden.

10. Steuereinheit (10) nach Anspruch 9, bei der die Kappe (34) zwischen der Verschlussposition und einer Öffnungsposition beweglich ist, wobei die Kappe (34) geeignet ist, in Bezug zur Anschlusswand (20) zu gleiten, um sich zwischen den Öffnungs- und Verschlusspositionen entlang einer Gleitachse (B) der Kappe (34) zu bewegen, oder wobei sie geeignet ist, um die Drehachse zu schwenken und entlang der Gleitachse (B) zu gleiten, um sich zwischen den Öffnungs- und Verschlusspositionen zu bewegen.

11. Steuereinheit (10) nach Anspruch 10, bei der die Kappe (34) geeignet ist, in Bezug zur Anschlusswand (20) zu gleiten, ferner umfassend eine Gleitrille (40), die auf der Kappe (34) ausgebildet und eingerichtet ist, um mit einem Führungsvorsprung (42) zusammenzuwirken, der im Bereich der Anschlusswand (20) ausgebildet ist, um das Gleiten der Kappe (34) zwischen einer ersten und einer zweiten Gleitposition zu führen.

12. Steuerpaket für einen Antriebsmotor einer Fluidumwälzpumpe, wobei das Steuerpaket umfasst:
- eine Steuereinheit (10) nach einem der vorhergehenden Ansprüche;
- einen Verbinder (16), der gleichzeitig an die Anschluss- (18) und Massekontaktstifte (28) der Steuereinheit (10) angeschlossen ist.

13. Steuerpaket nach Anspruch 12, bei dem der Verbinder (16) umfasst:
- mindestens einen Signalverbinderabschnitt, der geeignet ist, an den Übertragungsabschnitt des Anschlussstifts (18) angeschlossen zu werden, oder
- mindestens einen Leistungsverbinderabschnitt und mindestens einen Masseverbinderabschnitt, die geeignet sind, an den Leistungsabschnitt des Anschlussstifts (18) bzw. des Massekontaktstifts (28) angeschlossen zu werden.

14. Verfahren für den Anschluss eines Verbinders (16) an eine Steuereinheit (10), wobei das Verfahren die folgenden Schritte umfasst, darin bestehend:
- ein Steuerpaket nach Anspruch 12 oder 13 bereitzustellen;
- den Verbinder (16) an die Steuerkarte (12) der Steuereinheit (10) anzuschließen, so dass der Verbinder (16) gleichzeitig an die Anschluss- (18) und Massekontaktstifte (28) angeschlossen ist.

## Claims

1. Control box (10) for a drive motor of a fluid circulation pump, comprising;
- a control board (12) of the drive motor extending mainly in two directions forming a map plane (P1) and including at least one connection pin (18), said connection pin (18) is formed following a connection plane (P2) coincident with the map plane (P1) and comprises a power portion for supplying energy to the control board (12) and a transmission portion allowing the control board (12).) to receive or transmit an information signal;
- a ground pin (28) adapted to connect the drive motor to a ground to form an electrical circuit with the power portion of the connection pin (18);
in which the connection (18) and ground (28) pins are arranged in the same connection plane (P2) and are able to be connected simultaneously to the same connector (16)
**characterized in that** the ground pin (28) extends inside a cutout (32) formed in the control board (12).

2. Control box (10) according to claim 1, wherein the connection pins (18) and ground (28) extend mainly along an extension axis (A) included in the connection plane (P2).

3. Control box (10) according to claim 1 or 2, wherein the power and transmission portions of the connection pin (18) are formed by connection tabs (26) electrically connected to a printed circuit on the control board (12).

4. Control box (10) according to any one of the preceding claims, wherein the connection pin (18) and the ground pin (28) are configured to be connected to a standard connector (16).

5. Control box (10) according to any one of the preceding claims, wherein the connection pins (18) and ground (28) are accessible at the level of a connection wall (20) of the control box (10), the connection wall being configured to position and hold a cover (34) in a closed position in which the cover (34) prevents access to the connection (18) and ground (28) pins.

6. Control box (10) according to claim 5, wherein the connection pins (18) and ground (28) are accessible at the level of a connection wall (20) of the control box (10), a connection cavity (24) being formed in the connection wall (20) to accommodate the connection (18) and ground (28) pins, the cover (34) being configured to close the connection cavity (24) when the cover (34) is arranged in the closed position.

7. Control box (10) according to claim 6, further comprising a passage (36) of at least one cable (17) of connector (16), the passage (36) extending between the connection cavity (24) and a side wall (38) of the control box (10).

8. Control box (10) according to one of claims 5 to 7, further comprising a cover (34) configured to cooperate with the connection wall (20) so as to be positioned and maintained in a closed position in which the cover (34) prevents access to the connection (18) and ground (28) pins.

9. Control box (10) according to claim 8, wherein the cover (34) is movable between the closed position and an open position in which the connection pins (18) and ground (28) are accessible, or the cover (34) is configured to be removably mounted on the connection wall (20) in the closed position, the cover (34) being further configured to be removably secured to the connector (16).

10. Control box (10) according to claim 9, wherein the cover (34) is movable between the closed position and an open position, the cover (34) being adapted to slide relative to the connection wall (20) to move between the open and closed positions along a sliding axis (B) of the cover (34), or being adapted to pivot about the axis of rotation and slide along the axis slide (B) to move between the open and closed positions.

11. Control box (10) according to claim 10, wherein the cover (34) is adapted to slide relative to the connection wall (20), further comprising a sliding groove (40) formed on the cover (34) and configured to cooperate with a guide projection (42) formed at the connection wall (20) so as to guide the sliding of the cover (34) between a first and a second sliding position.

12. Control kit for a drive motor of a fluid circulation pump, the control kit comprising:
- a control unit (10) according to any one of the preceding claims;
a connector (16) simultaneously connected to the connection (18) and ground (28) pins of the control box (10).

13. The control kit of claim 12, wherein the connector (16) comprises:
- at least one signal connector portion adapted to be connected to the transmission portion of the connection pin (18), or
- at least one power connector portion and at least one earth connector portion adapted to be connected respectively to the power portion of the connection pin (18) and to the ground pin (28).

14. A method of connecting a connector (16) to a control box (10), wherein the method comprises the steps of:
- providing a control kit according to claim 12 or 13;
- connecting the connector (16) to the control board (12) of the control box (10) so that the connector (16) is simultaneously connected to the connection (18) and ground (28) pins.
